# FASCICULE DE BREVET EUROPEEN

(11) **EP 0 736 314 B1**
(45) Date de publication et mention de la délivrance du brevet: **14.05.2003**
(21) Numéro de dépôt: 96400596.1
(22) Date de dépôt: 21.03.1996
(51) Int. Cl.: B01D 3/22, B01D 3/00, B01J 19/30, F25J 3/04

(54) **Distributeur de fluides**
Verteiler für Flüssigkeiten
Distributor for fluids

(30) Priorité: 04.04.1995 FR 9503967
(43) Date de publication de la demande: 09.10.1996
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Belot, Jean-Marc, 94210 La Varenne Saint Hilaire (FR); Amstad, Jean-Claude, 94100 Saint Maur des Fosses (FR); Carcone, Alain, 77340 Pontault Combault (FR); Dordonnat, Jean-Claude, 92240 Malakoff (FR); Fraysse, Philippe, 92260 Fontenay aux Roses (FR); Gesbert, Thierry, 93250 Villemomble (FR); Grigoletto, Philippe, 77270 Villeparisis (FR)
(74) Mandataire: Le Moenner, Gabriel

(56) Documents cités:
- EP-A- 0 425 481
- EP-A- 0 434 510
- US-A- 3 070 360
- US-A- 3 222 040

## Description

La présente invention est relative à un distributeur de fluides pour colonne d'échange de chaleur et de matière, plus particulièrement du type à garnissages, et notamment aux colonnes de distillation d'air, du genre comprenant une série d'éléments profilés parallèles adjacents définissant des espaces alternés de gaz et de liquide, chaque élément profilé comportant au moins une portion de paroi dressée munie d'une rangée d'orifices. Elle concerne plus particulièrement un distributeur suivant le préambule de la revendication 1.

Un distributeur de fluides est décrit dans le document GB-A-2.046.623, où le distributeur est recouvert d'un garnissage non organisé constitué d'éléments en vrac.

L'utilisation dans les colonnes de distillation de garnissages organisés, du type ondulé-croisé, tel que décrit dans le document WO 89/10527 au nom de la Demanderesse, présente des avantages importants, notamment du point de vue de la perte de charge du gaz montant. Cependant, elle a été limitée jusqu'à présent pour la difficulté que représente la nécessité de distribuer uniformément le liquide au sommet de chaque tronçon de garnissage.

Dans les colonnes de grand diamètre, les garnissages du type "ondulé-croisé" ne sont pas auto-portants. Il faut donc, pour chaque tronçon de colonne, non seulement recueillir le liquide qui tombe du tronçon de garnissage supérieur, distribuer ce liquide uniformément sur le tronçon de garnissage inférieur, et favoriser, sans perte de charge excessive, une bonne répartition du gaz montant, mais encore supporter le tronçon de garnissage supérieur sur toute sa surface et donner un appui supérieur au tronçon de garnissage inférieur.

US-A-5.132.055 décrit un distributeur qui permet de bien remplir ces fonctions mais qui est coûteux à fabriquer. Le distributeur comprend une série d'éléments profilés parallèles adjacents définissant des espaces alternés de gaz et de liquide. Les éléments profilés présentent une section générale en forme de U avec des ailes sensiblement verticales. Chacune des ailes comporte une partie terminale s'écartant vers l'extérieur qui se raccorde avec une partie terminale de l'aile d'un élément profilé adjacent.

Les ailes se prolongent en oblique vers le haut et vers l'extérieur en un demi-toit qui se termine par une étroite bordure verticale dirigée vers le haut.

Les profilés sont disposés côte à côte, de sorte que leurs demi-toits se rejoignent, les bordures adjacentes s'appliquent l'une contre l'autre sur toute leur longueur et étant fixées ensemble par des points de soudure ou par agrafage.

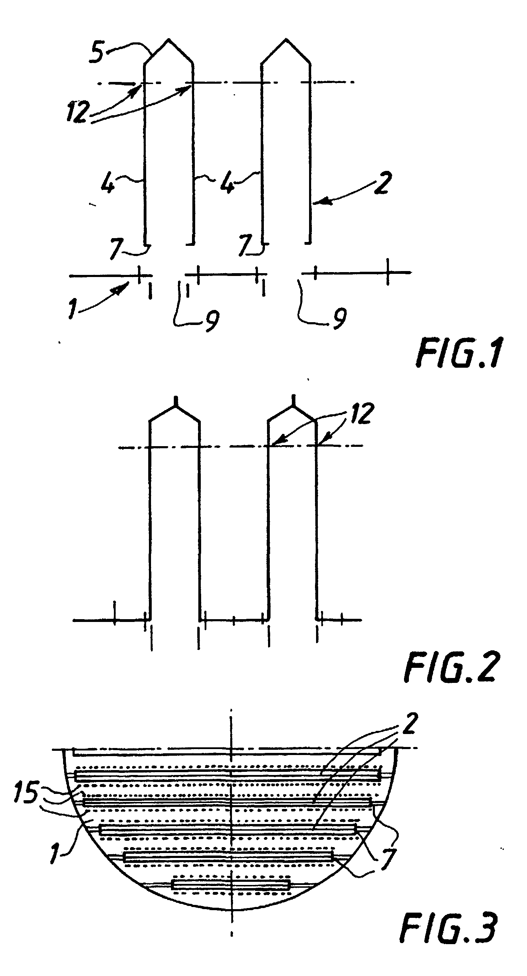

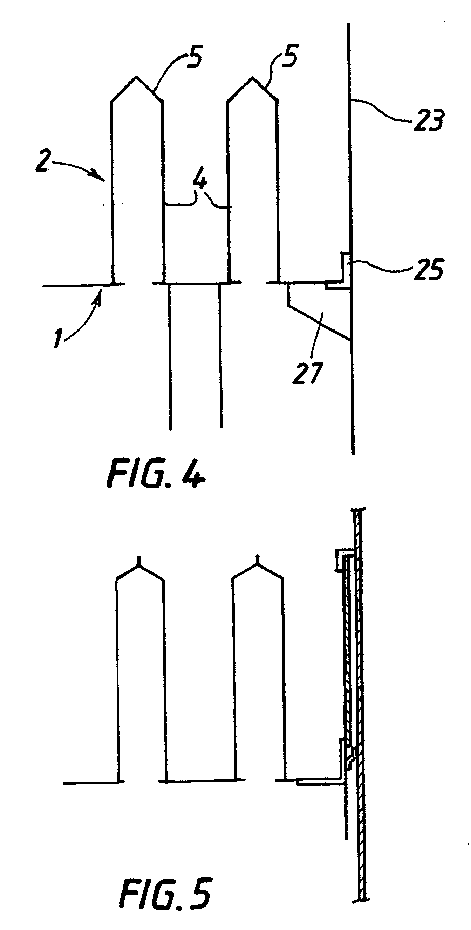

Pour assembler un distributeur de ce genre, on utilise une série de découpes qui sont pliées pour former des éléments profilés et ensuite fixés ensemble. Chacune des découpes est ensuite redécoupée à longueur, transversalement ou obliquement, de façon à s'appuyer par chaque extrémité sur une couronne rigide constituée par un profilé périphérique circulaire (voir figures 2 et 5 qui représentent des distributeurs selon l'art antérieur). La couronne est à section en L comportant une aile horizontale inférieure et une bordure extérieure dirigée vers le haut. Sur cette dernière est fixée hermétiquement une jupe. On remarque également une cornière supérieure d'ancrage.

US-A-5.000.883 décrit un distributeur amovible comprenant d'une part une base constituée par des profilés parallèles à bords relevés, et d'autre part, des éléments en forme de U, servant à obstruer les fentes entre ces profilés. Les éléments en forme de U sont maintenus en place par les bords des fentes qui forment un angle avec le plan général de la base, sans être fixés aux profilés de celle-ci.

L'invention a pour but de fournir un distributeur de fabrication rapide et peu coûteuse.

L'invention a également pour but de fournir un distributeur plus rigide que ceux de l'art antérieur.

A cet effet, le distributeur est conforme à la revendication 1.

D 'autres caractéristiques sont décrites dans les revendications 2 à 6.

L'invention a également pour objet une colonne d'échange de chaleur et de matière comprenant au moins un distributeur tel que défini ci-dessus.

L'invention a également pour objet un procédé de fabrication d'un distributeur de fluides pour une colonne d'échange de chaleur et de matière comprenant les étapes définies dans la revendication 12.

Un exemple de réalisation de l'invention va maintenant être décrit en regard des dessins annexés, sur lesquels :
- la figure 1 est une coupe transversale partielle en élévation des éléments du distributeur avant assemblage ;
- la figure 3 est une vue d'une partie du distributeur ;
- la figure 4 représente en coupe longitudinale une partie d'une colonne de distillation d'air équipée d'un distributeur selon l'invention ; et
- la figure 6 représente en coupe axiale une partie d'une colonne de distillation d'air équipée d'un distributeur selon l'invention.

Comme illustré à la figure 1, le distributeur est composé de deux types d'éléments principaux : le fond horizontal perforé 1 et les éléments profilés, généralement en forme de U renversés 2. Les éléments en forme de U ont deux parois verticales parallèles 4 jointes par un toit 5.

Les deux parois se terminent vers le bas par un pied 7, plié vers l'intérieur de l'élément. Chaque élément est donc constitué par une bande de métal, pliée pour obtenir la forme voulue, sans joints ni soudures.

Le fond horizontal perforé 1 est en forme de plaque circulaire et possède un nombre de fentes 9 qui définissent les espaces de gaz du distributeur. Comme on voit à la figure 3, ces fentes sont parallèles et s'étendent presque jusqu'au bord du fond 1.

Les fentes 9 et les éléments profilés 2 sont dimensionnés de sorte que les pieds 7 peuvent être soudés aux bords des fentes, afin que les profilés recouvrent les fentes 9.

Le fond 1 et les éléments profilés sont en acier inoxydable. Les éléments profilés sont en moyenne plus épais que ceux de l'art antérieur, du fait que l'assemblage du distributeur comprend beaucoup moins d'étapes de pliage, ce qui confère de la rigidité supplémentaire au distributeur selon l'invention.

Dans la figure 4, le distributeur assemblé 1 est soudé à l'intérieur de la virole 23 d'une colonne de distillation d'air par l'intermédiaire d'une cornière souple 25, sur laquelle est posé directement le fond 1 du distributeur.

L'horizontalité du fond 1 est assurée par des goussets supports 27 espacés autour de la circonférence de la virole 23 dans la direction des cheminées.

La cornière 25 est constituée d'un profilé périphérique circulaire à section en L.

En fonctionnement, le liquide tombe de toute la surface d'un pack au-dessus du distributeur et est recueilli dans des espaces de liquide entre les éléments profilés 2. Le liquide est ensuite distribué uniformément à un pack inférieur grâce au maillage régulier des trous 15 formés dans le fond horizontal.

En même temps, le gaz montant pénètre dans les espaces de gaz et en sort par les orifices 12 au-dessus du niveau du liquide.

Le gaz est ainsi, lui aussi, réparti à peu près uniformément sur toute la section de la colonne sans perte de charge excessive au passage du distributeur. Grâce au fait que les orifices 12 sont prévus dans les parois verticales 4, et également grâce à leur forme oblongue, ces ouvertures offrent une aire totale étendue au passage du gaz, sans gêner la chute du liquide sur toute la surface du distributeur et sans réduire de façon importante l'inertie mécanique des parois 4.

Au lieu d'être soudés, les éléments profilés peuvent être assemblés au fond 1 d'une autre manière qui soit encore permanente et étanche.

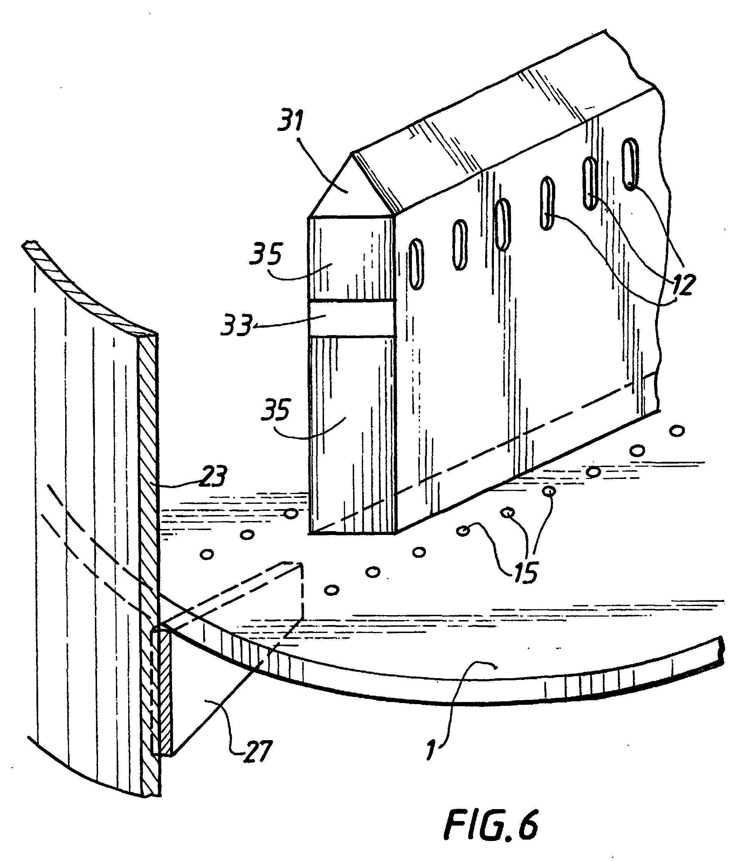

Comme illustré à la figure 6, le distributeur est monté dans la virole 23 au moyen des goussets 27 orientés dans l'axe des fentes 9 et des éléments profilés 2. Un gousset 27 est positionné au bout de chaque fente 9.

En plus des orifices 12, les profilés 2 comprennent des ouvertures triangulaires latérales 31 au niveau du toit 5 qui distribuent les gaz entre les profilés 2 et la virole 23.

Des ouvertures intermédiaires latérales 33 en-dessous des orifices 12 servent à distribuer les gaz mais aussi à permettre le débordement de liquide, remplaçant ainsi les "tulipes" des distributeurs connus.

Ces ouvertures 31 et 33 sont formées en soudant des plaquettes 35 sur les bords des profilés d'une manière étanche.

Il est à noter que le fond du distributeur selon l'invention est complètement plat (au moins sur la surface supérieure) et donc est d'une fabrication particulièrement facile, en comparaison avec le fond selon US-A-5.000.883, dont les fentes comprennent un bord relevé.

## Revendications

1. Un distributeur de fluides pour colonne d'échange de chaleur et de matière, comprenant d'une part des éléments profilés (2) sans joints ni soudures pliés en forme de U renversé, à parois sensiblement verticales (4) munies d'orifices (12), et d'autre part, un fond (1) perforé dans lequel sont formées une pluralité de fentes parallèles (9), chaque fente étant recouverte par un des éléments profilés, **caractérisé en ce que** le fond (1) est complètement plat, au moins sur sa surface supérieure, et **en ce que** chaque élément profilé (2) est soudé au fond ou assemblé à celui-ci d'une autre manière permanente et étanche, au moyen des parois (4).

2. Un distributeur selon la revendication 1, dans lequel l'élément profilé est fixé aux deux bords opposés de la fente (9).

3. Un distributeur selon l'une des revendications 1 ou 2, dans lequel le fond est constitué d'une plaque perforée munie de fentes.

4. Un distributeur selon la revendication 1, dans lequel chacune des parois (4) se termine en au moins un pied (7) tourné vers l'intérieur de l'élément (2) et parallèle à la surface du fond (1), les pieds (7) servant à attacher les éléments au fond.

5. Un distributeur selon l'une des revendications précédentes comprenant des plaquettes (35) fixées au côté des éléments profilés afin de former des ouvertures latérales (31, 33).

6. Un distributeur selon la revendication 5, dans lequel les ouvertures (33) permettent le débordement d'un liquide.

7. Une colonne d'échange de chaleur et de matière , contenant au moins un distributeur selon l'une des revendications précédentes.

8. Une colonne d'échange de chaleur et de matière, contenant au moins un distributeur (21) selon la revendication 1, rattaché directement à la virole (23) de la colonne par l'intermédiaire d'un profilé périphérique (25).

9. Une colonne selon l'une des revendications 7 ou 8, comprenant plusieurs goussets (27) espacés autour de la circonférence de la virole (23) qui servent de support pour le fond du distributeur.

10. Une colonne selon la revendication 9 dans laquelle chaque gousset (27) est orienté dans l'axe de la fente (9) qu'il juxtapose.

11. Une colonne selon l'une des revendications 6 à 9, du type à garnissages.

12. Procédé de fabrication d'un distributeur de fluide pour une colonne d'échange de chaleur et de matière comprenant les étapes de :
- découper des fentes parallèles (9) dans une plaque circulaire (1) perforée complètement plate, au moins sur sa surface supérieure;
- découper et plier des plaques perforées pour former une pluralité d'éléments profilés (2) en forme de U renversé à parois sensiblement verticales sans joints ni soudures;
- fixer de manière permanente et étanche les éléments profilés sur les fentes (9) afin de les recouvrir.

## Patentansprüche

1. Fluidverteiler für eine Wärme- und Stoffaustauschkolonne, der einerseits weder Verbindungsstellen noch Schweißnähte aufweisende Profilelemente (2) in Form eines umgekehrten U mit im Wesentlichen vertikalen Wänden (4), die mit Öffnungen (12) versehen sind, gekrümmt sind, und andererseits einen perforierten Boden (1), in dem mehrere parallele Schlitze (9) ausgebildet sind, umfasst, wobei jeder Schlitz durch eines der Profilelemente bedeckt wird, **dadurch gekennzeichnet, dass** der Boden (1) zumindest auf seiner Oberseite vollständig flach ist und dass jedes Profilelement (2) mittels der Wände (4) mit dem Boden verschweißt oder auf eine andere dauerhafte und dichte Weise daran angebracht ist.

2. Verteiler nach Anspruch 1, bei dem das Profilelement an beiden einander gegenüberliegenden Rändern des Schlitzes (9) befestigt ist.

3. Verteiler nach Anspruch 1 oder 2, bei dem der Boden aus einer mit Schlitzen versehenen perforierten Platte besteht.

4. Verteiler nach Anspruch 1, bei dem jede der Wände (4) in mindestens einem zur Innenseite des Elements (2) gerichteten und parallel zur Oberfläche des Bodens (1) verlaufenden Fuß (7) des Elements (2) abschließt, wobei die Füße (7) zum Anbringen der Elemente am Boden dienen.

5. Verteiler nach einem der vorhergehenden Ansprüche, der Scheiben (35) umfasst, die an der Seite der Profilelemente so befestigt sind, dass sie seitliche Öffnungen (31, 33) bilden.

6. Verteiler nach Anspruch 5, bei dem die Öffnungen (33) das Überlaufen einer Flüssigkeit gestatten.

7. Wärme- und Stoffaustauschkolonne, die mindestens einen Verteiler nach einem der vorhergehenden Ansprüche enthält.

8. Wärme- und Stoffaustauschkolonne, die mindestens einen Verteiler (21) nach Anspruch 1 enthält, der mittels eines Umfangsprofils (25) direkt an der Hülse (23) der Kolonne befestigt ist.

9. Kolonne nach Anspruch 7 oder 8, die mehrere Eckstücke (27) umfasst, die um den Umfang der Hülse (23) verteilt sind und zur Abstützung des Bodens des Verteilers dienen.

10. Kolonne nach Anspruch 9, bei der jedes Eckstück (27) entlang der Achse des danebenliegenden Schlitzes (9) ausgerichtet ist.

11. Kolonne nach einem der Ansprüche 6 bis 9 der eine Packung aufweisenden Art.

12. Verfahren zur Herstellung eines Fluidverteilers für eine Wärme- und Stoffaustauschkolonne, bei dem man:
- die parallelen Schlitze (9) in einer zumindest auf der Oberseite vollständig flachen, perforierten kreisförmigen Platte (1) ausschneidet;
- die perforierten Platten zur Herstellung mehrerer Profilelemente (2) in Form eines umgekehrten U mit im Wesentlichen vertikalen Wänden und ohne Verbindungsstellen oder Schweißnähte ausschneidet;
- die Profilelemente auf dauerhafte und dichte Weise an den Schlitzen (9) befestigt, um sie zu bedecken.

## Claims

1. Fluid distributor for heat and material exchange column, comprising on the one hand join-free and weld-free profiled elements (2) folded into an inverted U shape, with substantially vertical walls (4) provided with orifices, and on the other hand, a perforated base (1) in which a plurality of parallel slots (9) are formed, each slot being covered by one of the profiled elements, **characterized in that** the base (1) is completely flat, at least over its upper surface, and **in that** each profiled element (2) is welded to the base or assembled thereto in some other permanent and sealed manner, by means of the walls (4).

2. Distributor according to Claim 1, in which the profiled element is fastened to the two opposite edges of the slot (9).

3. Distributor according to either of Claims 1 and 2, in which the base consists of a perforated plate provided with slots.

4. Distributor according to Claim 1, in which each of the walls (4) ends in at least one foot (7) turned towards the inside of the element (2) and parallel to the surface of the base (1), the feet (7) serving to attach the elements to the base.

5. Distributor according to one of the preceding claims, comprising small plates (35) fastened to the side of the profiled elements in order to form side openings (31, 33).

6. Distributor according to Claim 5, in which the openings (33) allow a liquid to overflow.

7. Heat and material exchange column, containing at least one distributor according to one of the preceding claims.

8. Heat and material exchange column, containing at least one distributor (21) according to Claim 1, fastened directly to the shell (23) of the column via a peripheral profile (25).

9. Column according to either of Claims 7 and 8, comprising several brackets (27) spaced around the circumference of the shell (23) which act as a support for the distributor base.

10. Column according to Claim 9, in which each bracket (27) is oriented along the axis of the slot (9) that it juxtaposes.

11. Column according to one of Claims 6 to 9, of the packed type.

12. Method of manufacturing a fluid distributor for a heat and material exchange column comprising the steps of:
- cutting parallel slots (9) in a perforated circular plate (1) which is completely flat, at least over its upper surface;
- cutting and folding the perforated plates in order to form a plurality of join-free and weld-free profiled elements (2) in the shape of an inverted U with substantially vertical walls;
- fastening the profiled elements onto the slots (9) in a permanent and sealed manner so as to cover them.
